# EUROPÄISCHE PATENTANMELDUNG

(11) **EP 4 520 497 A1**
(43) Veröffentlichungstag der Anmeldung: **12.03.2025**
(21) Anmeldenummer: 24199758.4
(22) Anmeldetag: 11.09.2024
(51) Int. Cl.: B28B 7/00, B28B 17/00, E04H 12/12, F03D 13/20

(54) **VERFAHREN ZUR HERSTELLUNG EINES KONISCHEN ODER ZYLINDRISCHEN RINGSEGMENTS UND EINES SPANNBETONTURMS**

(30) Priorität: 11.09.2023 DE 102023124388
(71) Anmelder: FUCHS Europoles Wind GmbH, 92318 Neumarkt (DE)
(72) Erfinder: Joos, Jürgen, 88605 Meßkirch-Menningen (DE); Dittmar, Frank, 92318 Neumarkt i.d. Oberpfalz (DE); Fuchs, Conrad, 92234 Berching (DE)
(74) Vertreter: Ziebig Hengelhaupt Intellectual Property Attorneys Patentanwaltskanzlei PartGmbB

(57) **Zusammenfassung**

Die Erfindung betrifft ein Verfahren zur Herstellung eines konischen oder zylindrischen Ringsegments (1), insbesondere für einen Spannbetonturm (4) einer Windkraftanlage, wobei das Ringsegment (1) als Betonfertigteil in einer hochpräzisen Schalung (15) ausgebildet wird, so dass Maßabweichungen der Kontaktflächen der Ringsegmente (1) in einem Toleranzbereich von ± 0,5 mm, vorzugsweise ± 0,3 mm, liegen, sowie ein Verfahren zur Herstellung eines Spannbetonturms (4), welcher derartige Ringsegmente (1) umfasst. Zur Herstellung des Spannbetonturms (4) werden die Ringsegmente (1) zu Ringen (2) zusammengesetzt und mehrere Ringe (2) aufeinander positioniert, wobei horizontale Fugen (9) zwischen den Ringen (2) trocken ohne Verbund ausgeführt werden.

## Beschreibung

Die Erfindung betrifft ein konisches oder zylindrisches Ringsegment, insbesondere für einen Turm einer Windkraftanlage, das als Betonfertigteil ausgebildet ist, sowie ein Verfahren zur Herstellung eines solchen Ringsegments. Die Erfindung betrifft ferner ein Verfahren zur Herstellung eines Spannbetonturms aus derartigen Ringsegmenten.

Windkraftanlagen besitzen einen Turm, der zum Beispiel in Stahlbetonbauweise hergestellt sein kann. Der Turm besteht aus Ringsegmenten, die als Betonfertigteile ausgebildet sind. Dadurch ist eine witterungsunabhängige Vorfertigung der Ringsegmente möglich, die vorgefertigten Ringsegmente werden anschließend an den Aufstellungsort transportiert und dort zu einem Spannbetonturm montiert. Die Ringsegmente werden zunächst zu Ringen zusammengesetzt und aufeinandergestapelt. Die konischen Ringe werden bei herkömmlichen Türmen durch Mörtel oder eine Vergussmasse miteinander verbunden. Daneben können auch mechanische Verbindungselemente wie Schraubverbindungen und dergleichen verwendet werden.

Bei einem Hybridturm besteht der untere Teil aus einem Spannbetonturm in Stahlbetonbauweise, auf den ein Übergangsstück aufgesetzt ist. Der obere Teil des Hybridturms wird durch einen Stahlrohrturm gebildet. Auf dem Stahlrohrturm befindet sich die Maschinentechnologie mit Maschinenhaus, Generator, Nabe, Rotorblättern usw.

Die für den Stahlbetonturm verwendeten zylindrischen oder konischen Ringsegmente werden werkseitig in einer Schalung hergestellt. Hierbei ist es bekannt, die Ringsegmente in vertikaler Ausrichtung herzustellen, d. h. die zylindrischen oder konischen Ringsegmente werden in einer Schalung aufrechtstehend entsprechend ihrer bestimmungsgemäßen Ausrichtung am Turm aus bewehrten oder unbewehrten Beton ausgebildet. Mit anderen Worten erfolgt die Herstellung bekannter Ringsegmente in einer herkömmlichen Schalung, welche typischerweise einen nach oben hin geöffneten Hohlraum bildet, in der die Ringsegmente in einer axialen Ausrichtung im Wesentlichen parallel zum Schwerefeld ausgebildet werden. Eine solches Vorgehen kann aus fertigungstechnischer Sicht vorteilhaft sein, da insbesondere durch eine konzentrische Anordnung solcher Schalungen ermöglicht wird, mehrere zylindrische oder konische Ringsegmente mit geeigneten Abmessungen in einem Fertigungsschritt aus Beton auszubilden.

Dabei kann jedoch das Problem auftreten, dass die Maßhaltigkeit der Kontaktflächen der Ringsegmente nicht zufriedenstellend ist. Bei der herkömmlichen Herstellung in vertikaler Ausrichtung können relativ große Ungenauigkeit insbesondere bereits dadurch entstehen, dass die Schalung beim Befüllen mit Betonmasse gegenüber dem Schwerefeld leicht verkippt aufgestellt wird, da zumindest eine der Kontaktflächen der Ringsegmente durch Aushärten der freien Oberfläche der in die Schalung eingefüllten Betonmasse gebildet wird. In diesen Fällen ist es erforderlich, die Oberfläche des ausgeschalten Ringsegments nachträglich durch ein mechanisches Verfahren zu bearbeiten, beispielsweise durch Schleifen oder Fräsen. Bei einem vorhandenen Untermaß muss zusätzliches Material auf die Oberfläche des Ringsegments aufgetragen werden. Derartige Nacharbeiten sind allerdings mit einem hohen Zeitaufwand und dementsprechend hohen Kosten verbunden.

In diesem Zusammenhang beschreibt WO 2011/157659 A1 ein Verfahren, bei dem ein in einer Gießform hergestelltes Ringsegment nachträglich materialabtragend bearbeitet wird, so dass die aufwändige Herstellung von sehr exakten Gießformen vermieden werden kann.

DE 10 2008 016 828 A1 beschreibt die Herstellung eines Betonfertigteils in einer Gießform mit einem planebenen Boden, um am Betonfertigteil eine planebene Unterseite zu erzeugen. Auf einer der Unterseite gegenüberliegenden Stoßfläche wird eine Ausgleichsschicht aufgetragen, welche anschließend abgetragen wird, um eine planparallele Ausbildung der gegenüberliegenden Flächen zu erzeugen.

DE 10 2016 115 042 A1 offenbart ganz allgemein, dass es generell vorteilhaft sein kann, Kontaktflächen von Betonfertigteilen schalungsglatt, d. h. unbearbeitet auszubilden. Es wird allerdings weder beschrieben, wie eine hohe Maßhaltigkeit von insbesondere weniger als 0,5mm ohne Nachbearbeitung der Oberflächen realisiert werden kann.

Es besteht somit weiterhin Bedarf an einem Ringsegment, das mit der erforderlichen Genauigkeit und dennoch kostengünstig herstellbar ist.

Der Erfindung liegt daher die Aufgabe zugrunde, ein konisches oder zylindrisches Ringsegment anzugeben, das hinsichtlich der Maße seiner Kontaktflächen genau und dennoch kostengünstig hergestellt werden kann. Es insbesondere Aufgabe der Erfindung, ein kosteneffizientes Verfahren zur Herstellung von Ringsegmenten mit einer für Spanbeton- oder Hybridtürme geeigneten Maßhaltigkeit anzugeben.

Zur Lösung dieser Aufgabe ist ein Verfahren zur Herstellung eines Ringsegments mit den Merkmalen des Anspruchs 1 vorgesehen.

Die Erfindung beruht auf der Idee, das Ringsegment in einer hochpräzisen Schalung herzustellen, so dass Maßabweichungen zumindest der horizontalen Kontaktflächen der Ringsegmente in einem vergleichsweise engen Toleranzbereich von ± 0,5 mm, vorzugsweise ± 0,3 mm, liegen. Bevorzugt liegen alle Kontaktflächen der Ringsegmente in dem angegebenen Toleranzbereich. In diesem Fall sind nach dem Ausschalen keine Nacharbeiten erforderlich, wodurch sich eine beträchtliche Einsparung von Arbeitszeit und Kosten ergibt. Die durch die Erfindung erzielte Genauigkeit der Maße der Kontaktflächen ist mit einer herkömmlichen Schalung für Ringsegmente für Windkraftanlagen nicht erzielbar. Durch die Verwendung außergewöhnlich präziser Schalungen wird sichergestellt, dass die Maße der Kontaktflächen der Ringsegmente in einem besonders engen Toleranzbereich liegen. Durch die hohe Präzision der Ringsegmente ist auch sichergestellt, dass Aussparungen in den Ringsegmenten präzise Kanäle für Spannglieder wie Litzen bilden, so dass die Spannglieder einfach eingezogen werden können.

Es versteht sich, dass die Kontaktflächen der Ringsegmente besonderes bevorzugt in einem Toleranzbereich von ± 0,5 mm, vorzugsweise ± 0,3 mm, oder weniger liegen. Die maximale Toleranzabweichung von ± 0,5 mm, vorzugsweise ± 0,3 mm, ist insbesondere hinsichtlich einer Ebenheitsabweichung der Kontaktflächen und/oder einer Parallelitätsabweichung von parallelen Kontaktflächen zueinander zu verstehen.

Der Erfindung weist somit den Vorteil auf, dass bei einem Ringsegment keinerlei Nacharbeiten erforderlich sind. Die Oberfläche eines ausgeschalten Ringsegments muss weder durch ein mechanisches Verfahren abgetragen werden, noch muss nach dem Ausschalen Material auf die Oberfläche des Ringsegments oder eines aus Ringsegmenten gebildeten Rings aufgebracht werden.

Zum Einhalten einer derartig präzisen Maßhaltigkeit bei Betonfertigteilen für Spannbetontürme wird somit vorgeschlagen, hochpräzise Schalungen zu verwenden, deren Formgebung die Lage der auszubildenden Kontaktflächen am Ringsegment vollständig bestimmen.

Als Kontaktflächen des Ringsegments werden hier in an sich bekannter Art und Weise solche Oberflächen des Ringsegments verstanden, welche bei der bestimmungsgemäßen Verwendung des Ringsegments im Spannbetonturmbau einen Stoß zu einem angrenzenden Ringsegment bilden. Bei einem Spanbetonturm bilden die zylindrischen oder konischen Ringsegmente einen Abschnitt der axialen Turmstruktur. Jedes Ringsegment erstreckt sich somit über einen Bereich einer Mantelfläche der Gestalt eines Zylinders oder Kegelstumpfs mit axialer Symmetrie und weist daher typischerweise vertikale Kontaktflächen, die einen Stoß zu einem in tangentialer bzw. Umfangsrichtung angrenzenden Ringsegment bilden, und horizontale Kontaktflächen, die einen Stoß zu einem in axialer Richtung angrenzenden Ringsegment bilden, auf.

Die angegebene Maßhaltigkeit bezieht sich zumindest auf die horizontalen Kontaktflächen, bevorzugt auf die horizontalen und die vertikalen Kontaktflächen des Ringsegments.

Das Ringsegment kann in der Schalung als Betonfertigteil aus unbewehrtem oder bewehrtem Beton herstellt werden. Zur Herstellung von Ringsegmenten als Betonfertigteile aus Stahlbeton wird in an sich bekannter Weise Bewehrungsstahl bzw. Armierungseisen mit Betonmasse in der Schalung vergossen. Die Ringsegmente sind bevorzugt zu vollumfänglichen Ringen zusammensetzbar. Jedes Ringsegment erstreckt sich somit besonders bevorzugt über einen Winkelbereich von 360° / n um die axiale Richtung, wobei n eine ganze Zahl größer als eins ist. Die Ringsegmente können insbesondere in tangentialer Richtung aneinander zu Ringen beispielsweise ohne zusätzliche Befestigungsmittel oder mittels herkömmlicher Befestigungsmittel, wie etwa Bolzen, Schrauben oder dergleichen, verbunden werden. In bevorzugten Ausführungen bilden zwei bis acht Ringsegmente einen umfänglichen Ring in der Turmstruktur. Die Anzahl der für einen Ring vorgesehenen Ringsegmente kann in Abhängigkeit des Durchmessers der Ringe variieren, insbesondere kann vorgesehen werden, kleinere Ringe der Turmstruktur durch weniger Ringsegmente, die sich in Umfangsrichtung über einen entsprechend größeren Winkelbereich um die axiale Richtung erstrecken, auszubilden.

Jedes Ringsegment umfasst zwei horizontale Kontaktflächen, welche jeweils einen Stoß zu einem in axialer Richtung angrenzenden Ringsegment bilden, und zwei vertikale Kontaktflächen, welche jeweils einen Stoß zu einem in tangentialer Richtung bzw. in Umfangsrichtung angrenzenden Ringsegment bilden. Bei einem Spannbetonturm bilden somit die in axialer Richtung aneinander angrenzenden, horizontalen Kontaktflächen der Ringsegmente horizontale Fugen in der Turmstruktur. Entsprechend bilden die in tangentialer Richtung bzw. Umfangsrichtung aneinander angrenzenden, vertikalen Kontaktflächen der Ringsegmente vertikale Fugen, die sich über einen axialen Abschnitt der Turmstruktur erstrecken.

Die Maßabweichungen der Kontaktflächen werden bevorzugt durch Schalungswandungen der Schalung vorgegeben, an denen in die Schalung eingefüllte Betonmasse formstabil aushärtet. Ein so hergestelltes Ringsegment umfasst demnach insbesondere keine Kontaktfläche, die durch Aushärten einer freien Oberfläche der in die Schalung eingefüllten Betonmasse gebildet worden ist. Ein derartiges Vorgehen kann bei Betonfertigteilen, die für Spanbetontürme dimensioniert sind, schon bei einer vergleichsweise geringfügigen Abweichungen der Ausrichtung der Schalung bezüglich des Schwerefelds zu Toleranzabweichungen führen, die eine anschließende Materialbearbeitung der Oberflächen notwendig macht. Zudem kann bereits durch den natürlichen Aushärteprozess der Betonmasse vergleichsweise große Oberflächenungenauigkeiten entstehen, die Nachbearbeitungen erfordern. Die Kontaktflächen der Ringsegmente bilden Stöße zu jeweils in axialer oder in tangentialer Richtung angrenzenden Ringsegmenten oder anderen Bauteilen der Turmstruktur. Das bedeutet, dass die am Ringsegment auszubildenden Kontaktflächen notwendigerweise an gegenüberliegenden Seiten des Ringsegments auszubilden sind. Um insbesondere das Ausschalen des Betonfertigteils aus der Schalung zu erleichtern, ist in vorteilhaften Ausgestaltung vorgesehen, die Schalung als einen verschließbaren Hohlraum auszubilden, der mittels einer Deckeleinrichtung mechanisch, beispielsweise manuell verschließbar ist. In vorteilhafter Ausgestaltung ist der Hohlraum mittels einer hydraulisch oder pneumatisch betriebenen, Deckeleinrichtung verschließbar. Vor dem Befüllen der Schalung wird diese vorzugsweise geschlossen, so dass insbesondere ein bis auf eine Einfüllöffnung für Betonmasse geschlossener Hohlraum gebildet wird. Optional wird Bewehrungsstahl vor dem Schließen der Schalung eingelegt, der anschließend mit der eingefüllten Betonmasse zur Herstellung von verstärkten Betonbauteilen vergossen wird. Nach dem Aushärten der Betonmasse kann die Schalung geöffnet werden, um das Ausschalen des Betonfertigteils zu erleichtern.

In bevorzugter Ausgestaltung erfolgt die Herstellung des Ringsegments "liegend", d. h. das Betonfertigteil wird in der Schalung in einer axialen Orientierung hergestellt, wobei das Ringsegment im Wesentlichen in axialer Ausrichtung in einer Ebene senkrecht zum Schwerefeld ausgebildet wird. Hierzu weist die Schalung vorzugsweise zum Ausbilden des zylindrischen oder konischen Ringsegments einen Schalboden mit einer kreisbogenförmigen Querschnittskontur auf. Der Schalboden bildet in dieser Ausgestaltung bezüglich einer Hochachse der Schalung eine nach oben gerichtete Wölbung aus.

Weiter vorteilhaft ist es, wenn zumindest eine der zur Ausbildung der Kontaktflächen vorgesehenen Schalungswandungen, insbesondere seitlichen Schalungswandungen, bezüglich des Schalbodens schwenkbar gelagert ist, um das Ausschalen des fertiggestellten Betonfertigteils weiter zu vereinfachen. Hierbei hat es sich als besonders vorteilhaft erwiesen, wenn die zumindest eine schwenkbare Schalungswandung vor dem Befüllen der Schalung mit Betonmasse bezüglich des Schalbodens beispielsweise durch Schraub- und/oder Bolzenverbindungen kraftschlüssig fixiert wird, um die gewünschte Maßhaltigkeit der dort gebildeten Kontaktflächen sicherzustellen.

Daneben betrifft die Erfindung ein Verfahren zur Herstellung eines Spannbetonturms aus derartigen Ringsegmenten und einen Spannbetonturm, insbesondere für einen Hybridturm einer Windkraftanlage. Der erfindungsgemäße Spannbetonturm zeichnet sich dadurch aus, dass Ringsegmente zu Ringen zusammengesetzt sind, wobei mehrere Ringe aufeinander positioniert sind, wobei horizontale Fugen zwischen den Ringen trocken ohne Füllmasse ausgeführt sind. Indem die einzelnen Ringe lediglich aufeinandergestapelt sind, entfallen zusätzliche Arbeitsgänge wie das Ein- oder Aufbringen von Mörtel oder Füllmasse in die horizontalen Fugen. Da Mörtel und Füllmasse nur in einem bestimmten Temperaturbereich verwendet werden können, kann die Montage eines Spannbetonturms an einem Aufstellungsort witterungsunabhängig durchgeführt werden. Dadurch werden saisonale Einschränkungen und Verzögerungen bei der Montage eines Hybridturms vermieden, die z. B. in Regionen mit langen Kälteperioden ansonsten auftreten könnten.

In ähnlicher Weise kann es bei dem erfindungsgemäßen Spannbetonturm vorgesehen sein, dass vertikale Fugen zwischen den Ringsegmenten trocken ohne Füllmasse ausgeführt sind. Durch das Vorsehen der trocken ausgeführten vertikalen Fugen ergeben sich dieselben Vorteile wie durch die trocken ausgeführten horizontalen Fugen. Insgesamt können durch diese Maßnahmen die am Aufstellungsort erforderlichen Arbeiten verkürzt werden, wodurch die Abhängigkeit der Montage von Witterungsbedingungen verringert wird.

Bei dem erfindungsgemäßen Spannbetonturm kann es optional vorgesehen sein, dass die Ringsegmente an ihren vertikalen Seiten gegengleich ausgebildete formschlüssige Verbindungselemente aufweisen. Diese Verbindungselemente erleichtern die Positionierung und Montage der aus den Ringsegmenten bestehenden Ringe.

Eine Weiterbildung der Erfindung sieht vor, dass der Spannbetonturm vorgespannte Spannglieder aufweist, die die Ringsegmente durchsetzen, wobei die Spannglieder einerseits an einem Fundament des Spannbetonturms und andererseits an einem auf dem obersten Ring angeordneten Übergangsstück verankert sind. Die Ringe des Stahlbetonturms sind somit lediglich durch die Spannglieder miteinander verbunden und verspannt.

Daneben betrifft die Erfindung ein konisches oder zylindrisches Ringsegment als Betonfertigteil, das in der hochpräzisen Schalung hergestellt wird, so dass die Maßabweichungen der Kontaktflächen der Ringsegmente in einem Toleranzbereich von ± 0,5 mm, vorzugsweise ± 0,3 mm, liegen. Die Erfindung betrifft auch ein Verfahren zur Herstellung eines Spannbetonturms aus solchen Ringsegmenten.

Die Erfindung wird nachfolgend anhand eines Ausführungsbeispiels unter Bezugnahme auf die Zeichnungen erläutert. Die Zeichnungen sind schematische Darstellungen und zeigen:
Fig. 1 ein aus drei erfindungsgemäßen konischen Ringsegmenten bestehender Ring eines Spannbetonturms;
Fig. 2 eine perspektivische Ansicht eines erfindungsgemäßen Spannbetonturms;
Fig. 3 einen erfindungsgemäßen Turm, der als Hybridturm ausgebildet ist;
Fig. 4 eine Schalung zur Herstellung eines konischen oder zylindrischen Ringsegments in einer Seitenansicht;
Fig. 5 die Schalung in einer weiteren, senkrecht zur Zeichenebene der Fig. 4 verlaufenden Seitenansicht; und
Fig. 6 ein Verfahren zur Herstellung des Ringsegments in einem schematischen Blockdiagramm.

Gleiche oder einander entsprechende Teile sind in allen Zeichnungsfiguren mit denselben Bezugszeichen versehen.

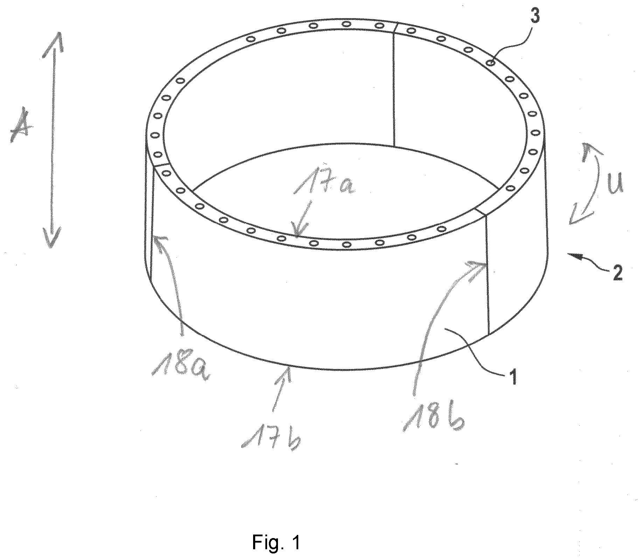

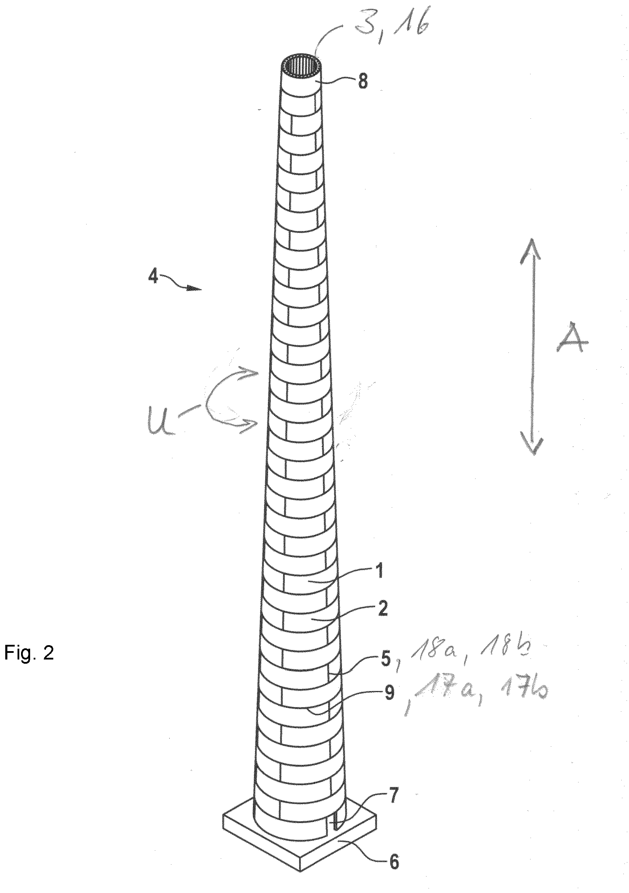

Fig. 1 zeigt einen aus drei konischen Ringsegmenten 1 bestehenden Ring 2. Die einzelnen Ringsegmente 1 sind mit einer Bewehrung versehene Betonfertigteile, die in einer hochpräzisen Schalung 15 hergestellt worden sind. Ein Ring 2 kann in Abhängigkeit von der axialen Höhe des Spannbetonturms 4 drei bis vier Ringsegmente aufweisen. Die Ringe 2 im unteren Bereich des in Fig. 2 beispielhaft dargestellten Spannbetonturms 4 werden aus vier Ringsegmenten 1 gebildet, im oberen Bereich weist jeder Ring 2 drei Ringsegmente 1 auf. Dementsprechend erstreckt sich ein Ring 2 des in den Zeichnungsfiguren dargestellten Ausführungsbeispiels entweder über 90° oder 120° in Umfangsrichtung. Jeder Ring 2 besitzt über den Umfang verteilte und in axialer Längsrichtung verlaufende Aussparungen 3, die als axiale Durchgangsöffnungen für die Spannglieder 16, die beispielsweise von Litzen bereitgestellt werden können, ausgebildet sind. Die Aussparungen 3 verlaufen entsprechend der Geometrie der Ringsegmente 1, die konisch oder zylindrisch ausgebildet sein können, parallel zu deren Außen- und Innenseite.

In Fig. 1 erkennt man, dass jedes Ringsegment 1 zwei gegenüberliegend angeordnete, horizontale Kontaktflächen 17a, b aufweist, die jeweils Stöße zu in axialer Richtung A angrenzenden Ringsegmenten 1 (siehe insbesondere Fig. 2) bilden. Des Weiteren umfasst jedes Ringsegment 1 zwei vertikale Kontaktflächen 18a, b, die jeweils Stöße zu in tangentialer Richtung, also in Umfangsrichtung U, angrenzenden Ringsegmenten 1 bilden. Wie insbesondere in Fig. 2 ersichtlich, weist die Turmstruktur horizontale Fugen 9 auf, die von den stoßseitig aneinander angrenzenden, horizontalen Kontaktflächen 17a, b gebildet werden. Entsprechend bilden die vertikalen Kontaktflächen 18a, b vertikale Fugen 5 der Turmstruktur.

Da das Ringsegment 1 in einer hochpräzisen Schalung 15 hergestellt wird, sind nach dem Ausschalen keine Nacharbeiten erforderlich. Auf diese Weise kann sichergestellt werden, dass Maßabweichungen der Kontaktflächen (17a, b, 18a, b) der Ringsegmente 1 in einem Toleranzbereich von ± 0,5 mm, vorzugsweise ± 0,3 mm oder weniger, liegen. Daraus ergibt sich der Vorteil, dass die Ringsegmente 1 trocken, ohne Verbund und ohne Füllmasse positioniert und mittels der Spannglieder 16 verspannt werden können. Insbesondere kann zumindest eine Mehrzahl von zu Ringen 2 zusammengesetzten Ringsegmenten 1, vorzugsweise alle Ringe 2, axial zwischen einem endseitigen Übergangsstück 8 der Turmstruktur und einer Verankerung im oder am Fundament 6 der Turmstruktur ohne Verguss der in die axialen Aussparungen 3 eingebrachten Spannglieder 16 kraftschlüssig verspannt werden. Aus Gründen der Stabilität kann insbesondere vorgesehen werden, maximal zwei der in axialer Richtung A unmittelbar an das Übergangsstück angrenzenden Ringe 2 vollumfänglich oder aus Ringsegmenten 1 mit Vergussverbindung der vertikalen Fugen 5 auszubilden. Die Montage eines Spannbetonturms 4 oder eines Hybridturms 10 kann somit weitestgehend witterungsunabhängig durchgeführt werden.

Aufgrund der extrem guten Maßhaltigkeit ist es nicht erforderlich, ein aus der Schalung 16 ausgeschaltes Ringsegment 1 nachträglich durch Schleifen, Fräsen oder ein ähnliches mechanisches Verfahren zu bearbeiten. Da bei dem Verfahren zwangsläufig keine untermaßigen Ringsegmente 1 entstehen, kann auf das nachträgliche Aufbringen von Material in Form von Füllmasse auf die Oberfläche insbesondere im Bereich der Kontaktflächen (17a, b, 18a, b) verzichtet werden.

Fig. 2 zeigt einen Spannbetonturm 4, der aus den aufeinander positionierten Ringen 2 besteht, die in dem dargestellten Ausführungsbeispiel konisch ausgebildet sind. Ein Spannbetonturm 4 kann auch zylinderförmige Ringe 2 aufweisen, beispielsweise können die obersten Ringe 2 unterhalb des Übergangsstücks 8 zylinderförmig ausgebildet sein. Vertikale Fugen 5 aufeinanderfolgender Ringe 2 sind entsprechend der Segmentierung des jeweiligen Rings 2 versetzt zueinander angeordnet. An dem unteren Ende des Spannbetonturms 4 befindet sich ein schematisch dargestelltes Fundament 6, in dem die Spannglieder 16 verankert sind. Die in Fig. 2 nicht näher dargestellte Endverankerung der Spannglieder 16 ist in diesem Ausführungsbeispiel in Trompetenform ausgeführt. Der unterste Ring 2 weist eine Türaussparung 7 auf.

Am oberen Ende des Spannbetonturms 4 befindet sich ein Übergangsstück 8, an dem die Spannglieder 16 mit ihren oberen Enden verankert sind.

Horizontale Fugen 9 zwischen den Ringen 2 sind trocken ohne Verbund und ohne Füllmasse ausgeführt. Die Ringe 2 werden somit lediglich durch die vorgespannten Spannglieder 16 axial zusammengehalten. In diesem Ausführungsbeispiel sind auch die vertikalen Fugen 5 zwischen den Ringsegmenten 1 trocken ohne Verbund ausgeführt. Zudem sind die Aussparungen 3 zumindest einer Mehrzahl der Ringe 2, vorzugsweise alle Ringe 2 der axialen Turmstruktur, nicht mit Vergussmasse verfüllt, so dass diese in axialer Richtung A lediglich durch die von den Spanngliedern 16 vermittelten, mechanischen Spannung fixiert werden.

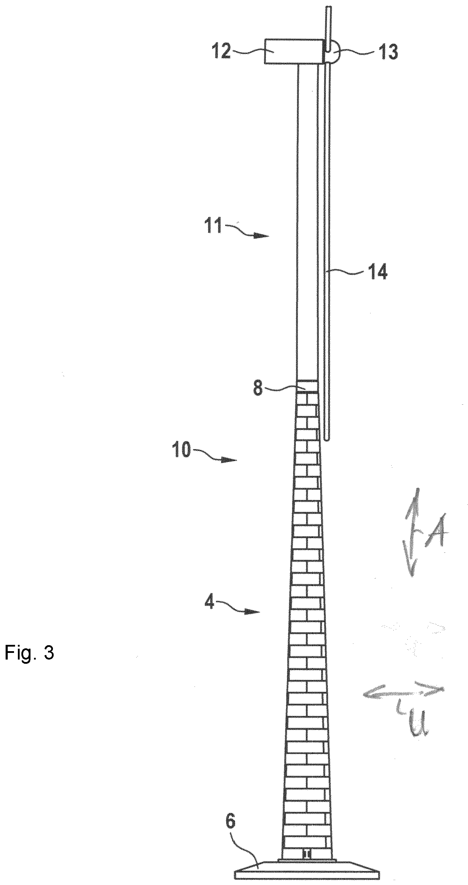

Fig. 3 zeigt einen Turm, der als Hybridturm 10 ausgebildet ist und das Fundament 6, den Spannbetonturm 4 und das Übergangsstück 8 aufweist, auf dem sich ein Stahlrohrturm 11 befindet. Auf dem Stahlrohrturm 11 ist ein Maschinengehäuse 12 angeordnet, in dem sich ein Generator befindet. Eine Generatorwelle weist eine Nabe 13 auf, an der Rotorblätter 14 befestigt sind.

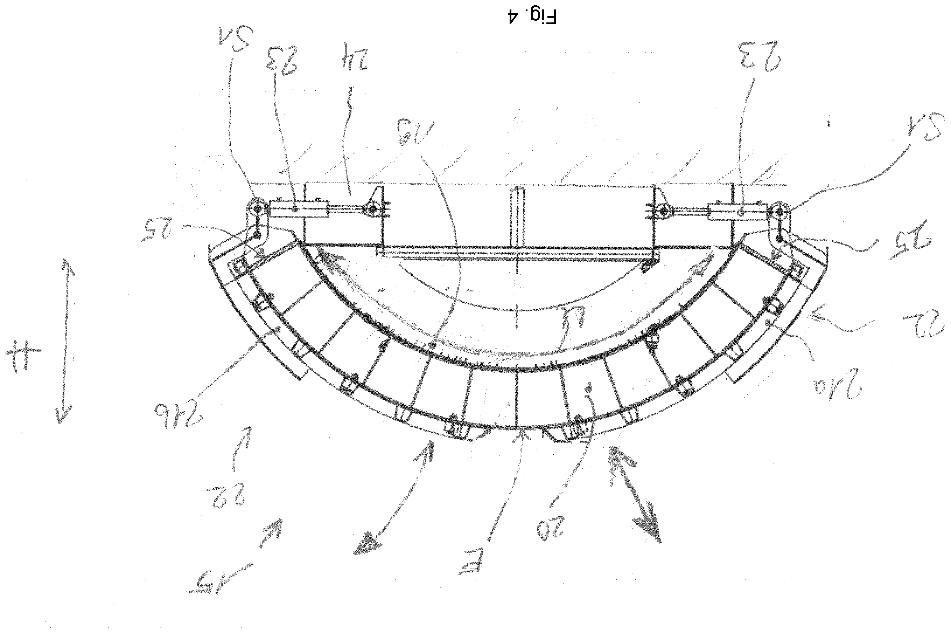

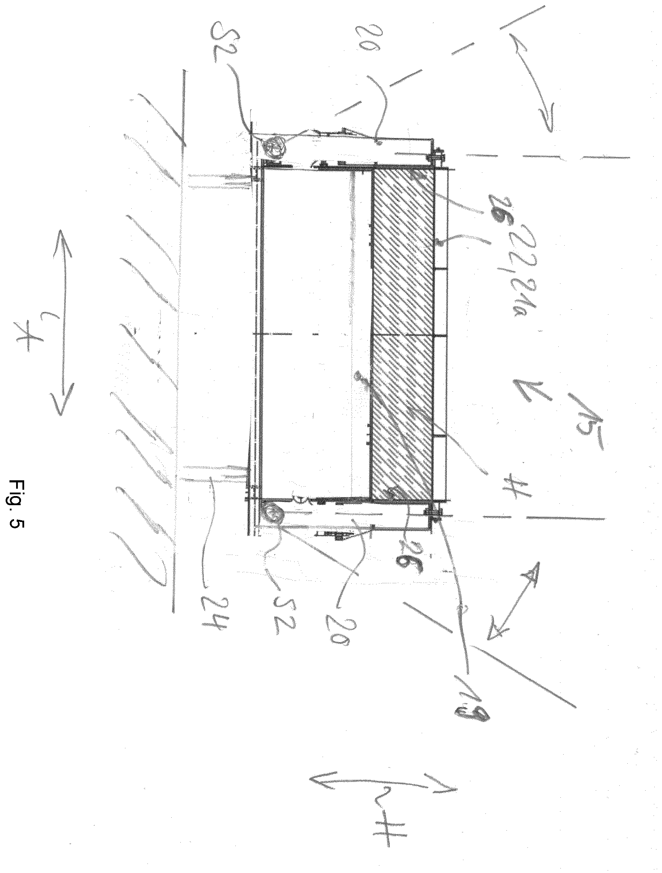

Fig. 4 und 5 zeigen eine hochpräzise Schalung 16 zur Herstellung von Ringsegmenten 1 als Betonfertigteile aus verstärktem oder unverstärktem Beton. Die Schalung 15 bildet einen Hohlraum für Betonmasse, der von einem Schalboden 19, zwei gegenüberliegenden Seitenteilen 20 und Deckel 21a, 21b einer Deckeleinrichtung 22 begrenzt wird. Dargestellt ist die Schalung 15 in geschlossenem Zustand, wobei die Schalung 15 einen - abgesehen von einer Einfüllöffnung E für die Betonmasse - geschlossenen Hohlraum bildet. Die Deckel 21a, 21b der Deckeleinrichtung 22 sind bezüglich des Schalbodens 19 um erste Schwenkachsen S1 schwenkbar gelagert, so dass diese, insbesondere zur Entnahme eines in der Schalung 15 hergestellten Ringsegments 1, geöffnet werden können. Im dargestellten Ausführungsbeispiel wird die zum Öffnen der Deckel 21a, 21b notwenige Kraft exemplarisch durch Hydraulikzylinder 23 vermittelt, die sich an einem Grundgestell 24, auf dem der Schalboden 19 der Schalung 15 stationär gelagert ist, abstützen.

Die Schalung 15 ist so ausgelegt, dass jede Kontaktfläche 17a, b, 18a, b durch Aushärten von Betonmasse an einer den Hohlraum H begrenzenden Schalungswandung 25, 26 gebildet wird. Auf diese Weise kann die Orientierung und Lage einer jeden Kontaktfläche 17a, b, 18a, b am Ringsegment 1 besonders präzise vorgegeben werden. Im dargestellten Beispiel wird die Orientierung und Lage der horizontalen Kontaktflächen 17a, b von den an den Seitenteilen 20 angeordneten Schalungswandungen 26 vorgegeben, wohingegen die vertikalen Kontaktflächen an den Schalungswandungen 25 der Schalung 15 gebildet werden.

Die Seitenteile 20 bzw. die zur Ausbildung der horizontalen Kontaktflächen 17a, b vorgesehenen Schalungswandungen 26 sind bezüglich des Schalbodens 19 schwenkbar gelagert, so dass auch diese zur Entnahme des hergestellten Betonfertigteils von dem Schalboden 19 um zweite Schwenkachsen S2 verschwenkt werden können. Um eine hinreichende Formstabilität der Schalung 15 zu erreichen, werden die Seitenteile 20 bzw. Schalungswandungen 26 bezüglich des Schalbodens 19 und/oder bezüglich des Grundgestells 24 kraftschlüssig mittels Schrauben, Bolzen oder dergleichen fixiert.

Der Schalboden 19 ist entsprechend dem herzustellenden Betonfertigteil gekrümmt ausgebildet und weist, wie insbesondere in Fig.4 gezeigt, eine kreisbogenförmige Querschnittskontur auf. Der Schalboden 19 ist bezüglich einer Hochachse H der Schalung 15 so orientiert, dass dieser eine nach oben gerichtete Wölbung bildet. Es versteht sich, dass die Hochachse H der Schalung 15 - wie in den Zeichnungsfiguren angedeutet - im Wesentlichen in vertikaler Richtung entsprechend dem Schwerefeld der Erde auszurichten ist.

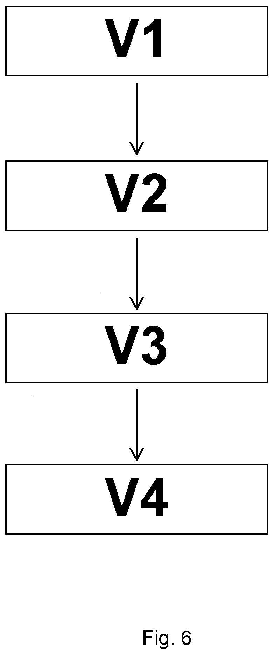

Fig. 6 illustriert das Verfahren zur Herstellung des konischen oder zylinderförmigen Ringsegments 1 in einem schematischen Blockdiagramm. In einem ersten Verfahrensschritt V1 wird die Deckeleinrichtung 22, gegebenenfalls nach optionalem Einbringen von Bewehrungsstahl, geschlossen. Die Seitenteile 20 bzw. die Schalungswandungen 26 werden in eine aufrechte Position verbracht und in dieser Position bezüglich des Schalbodens 19 und/oder des Grundgestells 24 kraftschlüssig fixiert.

In einem zweiten Verfahrensschritt V2 wird der in der Schalung 15 gebildete Hohlraum über die Einfüllöffnung E mit Betonmasse verfüllt. Anschließend wird die Betonmasse in der geschlossenen Schalung 15 in einem dritten Verfahrensschritt V3 ausgehärtet. Da die Ringsegmente 1 einzeln in eigens dafür vorgesehenen Schalungen 15 hergestellt werden, kann die Schalung 15 insbesondere zum Aushärten der eingefüllten Betonmasse an einen hierfür geeigneten Ort verbracht werden, so dass diese beispielsweise einer definierten Temperierung ausgesetzt wird. Dies ermöglicht insbesondere die Herstellung von qualitativ hochwertigen Ringsegmenten 1 mit hoher Präzession in einer reproduzierbaren Art und Weise, da die zum Aushärten wesentlichen Prozessparameter genau vorgegeben werden können. Nach dem Aushärten der Betonmasse wird die Deckeleinrichtung 22 der Schalung 15 in einem vierten Verfahrensschritt V4 geöffnet, die kraftschlüssige Fixierung der Seitenteile 20 gelöst und die Seitenteile 20 vom Schalboden 19 weggeklappt, um die Entnahme des fertiggestellten Betonfertigteils zu ermöglichen.

Es versteht sich, dass die Erfindung vorstehend anhand einer exemplarischen Ausführung beschrieben wurde, welche in den Zeichnungsfiguren dargestellt ist. Die Erfindung ist jedoch nicht auf das konkret dargestellte Ausführungsbeispiel beschränkt, vielmehr sind Abweichungen hiervon im Umfang des durch die beigefügten Patentansprüche festgelegten Schutzbereichs möglich und vorgesehen. Insbesondere können die Ringe 2 des Spannbetonturms 4 auch aus mehr oder weniger Ringsegmenten 1 als im dargestellten Beispiel hergestellt werden. Der Spannbetonturm 4 kann beispielsweise auch vollständig von zylindrisch ausgebildeten Ringen 2 bzw. Ringsegmenten 1 gebildet werden.

### Bezugszeichenliste

1 Ringsegment
2 Ring
3 Aussparung
4 Spannbetonturm
5 vertikale Fuge
6 Fundament
7 Türaussparung
8 Übergangsstück
9 horizontale Fuge
10 Hybridturm
11 Stahlrohrturm
12 Maschinengehäuse
13 Nabe
14 Rotorblatt
15 Schalung
16 Spannglied
17a horizontale Kontaktfläche
17b horizontale Kontaktfläche
18a vertikale Kontaktfläche
18b vertikale Kontaktfläche
19 Schalboden
20 Seitenteil
21a Deckel
21b Deckel
22 Deckeleinrichtung
23 Hydraulikzylinder
24 Grundgestell
25 Schalungswandung
26 Schalungswandung
S1 erste Schwenkachse
S2 zweite Schwenkachse
H Hochachse
A axiale Richtung
U Umfangsrichtung / tangentiale Richtung

## Patentansprüche

1. Verfahren zur Herstellung eines konischen oder zylindrischen Ringsegments (1) als Betonfertigteil in einer hochpräzisen Schalung (15) derart, dass Maßabweichungen von zumindest horizontalen Kontaktflächen (17a, b) der Ringsegmente (1), insbesondere aller Kontaktflächen (17a, b, 18a, b) der Ringsegmente (1), in einem Toleranzbereich von ± 0,5 mm, vorzugsweise ± 0,3 mm, liegen.

2. Verfahren zur Herstellung eines Ringsegments (1) nach Anspruch 1, wobei die Maßabweichungen der Kontaktflächen (17a, b, 18a, b) durch Schalungswandungen (25, 26) der Schalung (15) vorgegeben werden, an denen in die Schalung (15) eingefüllte Betonmasse formstabil aushärtet.

3. Verfahren zur Herstellung eines Ringsegments (1) nach einem der vorhergehenden Ansprüche, wobei Oberflächen des Ringsegments (1), insbesondere im Bereich der Kontaktflächen (17a, b, 18a, b), nach Ausschalung des Betonfertigteils aus der Schalung (15) weder materialauftragend noch materialabtragend bearbeitet werden.

4. Verfahren zur Herstellung eines Ringsegments (1) nach einem der vorhergehenden Ansprüche, wobei die Schalung (15) einen verschließbaren Hohlraum bildet, der mittels einer Deckeleinrichtung (22) mechanisch verschließbar, insbesondere mittels einer hydraulisch oder pneumatisch betriebenen, Deckeleinrichtung (22) mechanisch verschließbar ist.

5. Verfahren zur Herstellung eines Ringsegments (1) nach Anspruch 4, wobei die Schalung (15) vor dem Befüllen mit Betonmasse geschlossen wird, um einen durch eine Einfüllöffnung (E) befüllbaren, geschlossenen Hohlraum für Betonmasse auszubilden.

6. Verfahren zur Herstellung eines Ringsegments (1) nach Anspruch 4 oder 5, wobei die Schalung (15) zum Ausschalen des als Betonfertigteil hergestellten Ringsegments (1) geöffnet wird.

7. Verfahren zur Herstellung eines Ringsegments (1) nach einem der vorhergehenden Ansprüche, wobei die Schalung (15) zum Ausbilden des zylindrischen oder konischen Ringsegments (1) einen Schalboden (19) mit einer kreisbogenförmigen Querschnittskontur aufweist, der bezüglich einer Hochachse (H) der Schalung (15) eine nach oben gerichtete Wölbung bildet.

8. Verfahren zur Herstellung eines Ringsegments (1) nach einem der Ansprüche 2 bis 7, wobei zumindest eine der zur Ausbildung der Kontaktflächen (17a, b, 18a, b) vorgesehenen Schalungswandungen (26) bezüglich des Schalbodens (19) schwenkbar gelagert ist.

9. Verfahren zur Herstellung eines Ringsegments nach Anspruch 8, wobei die zumindest eine schwenkbare Schalungswandung (26) vor dem Befüllen der Schalung (15) mit Betonmasse bezüglich des Schalbodens (19) kraftschlüssig fixiert wird.

10. Verfahren zur Herstellung eines Spannbetonturms (4), wobei gemäß einem Verfahren nach einem der vorhergehenden Ansprüche hergestellte Ringsegmente (1) zu Ringen (2) zusammengesetzt werden, wobei mehrere Ringe (2) aufeinander positioniert werden, wobei horizontale Fugen (9) zwischen den Ringen (2) trocken ohne Füllmasse ausgeführt werden.

11. Verfahren zur Herstellung eines Spannbetonturms nach Anspruch 10, wobei vertikale Fugen (5) zwischen den Ringsegmenten (1) trocken ohne Füllmasse ausgeführt werden.

12. Verfahren zur Herstellung eines Spannbetonturms nach einem der Ansprüche 10 oder 11, wobei Ringsegmente (1) durchsetzende vorgespannte Spannglieder (16) vorgesehen werden, die einerseits an einem Fundament (6) des Spannbetonturms (4) und andererseits an einem auf dem obersten Ring (2) angeordneten Übergangsstück (8) verankert sind.

13. Verfahren zur Herstellung eines Spannbetonturms nach Anspruch 12, wobei die Ringe (2) oder eine Mehrzahl der Ringe (2) des Spannbetonturms (4) lediglich durch die am Fundament (6) und am Übergangsstück (8) verankerten Spannglieder (16) miteinander verbunden und verspannt werden.

14. Konisches oder zylindrisches Ringsegment (1), insbesondere für einen Spannbetonturm (4) oder Hybridturm (10) einer Windkraftanlage, das als ein gemäß einem Verfahren der vorhergehenden Ansprüche 1 bis 9 hergestelltes Betonfertigteil ausgebildet ist.

15. Spannbetonturm (4), hergestellt gemäß einem Verfahren der vorhergehenden Ansprüche 10 bis 13.
